# EUROPÄISCHE PATENTSCHRIFT

(11) **EP 3 818 283 B1**
(45) Veröffentlichungstag und Bekanntmachung des Hinweises auf die Patenterteilung: **15.05.2024**
(21) Anmeldenummer: 19736603.2
(22) Anmeldetag: 18.06.2019
(51) Int. Cl.: F16G 1/28, F16H 1/28

(54) **LENKGEETRIEBE**
STEERING GEAR
ENGRENAGE DE DIRECTION

(30) Priorität: 05.07.2018 DE 102018116331
(43) Veröffentlichungstag der Anmeldung: 12.05.2021
(73) Patentinhaber: ContiTech Deutschland GmbH, 30175 Hannover (DE)
(72) Erfinder: MARX, Peter, 38553 Wasbüttel (DE); TRAUE, Mirko, 32479 Hille (DE); KNOPP, Thomas, 38159 Vechelde (DE); WILSKE, Ernst, 39291 Nedlitz (DE); RULF, Eberhard, 39343 Bornstedt (DE); KONYA, Alexander, 30171 Hannover (DE); MELZ, Thomas, 30177 Hannover (DE)
(74) Vertreter: Continental Corporation
(86) Internationale Anmeldenummer: PCT/EP2019/065931
(87) Internationale Veröffentlichungsnummer: WO 2020/007599

(56) Entgegenhaltungen:
- JP-A- 2002 039 277
- JP-A- 2014 159 818
- JP-A- 2016 186 313

## Beschreibung

Die Erfindung betrifft ein Lenkgetriebe.

In der Druckschrift DE 10 2005 055 730 A1 ist ein Zahnriemengetriebe, insbesondere für ein Servolenksystem eines Fahrzeugs, mit einem Zahnriemen offenbart. Es ist vorgesehen, dass der Zahnriemen mit einer ersten Zahnriemenscheibe und einer zweiten Zahnriemenscheibe in Verzahnungseingriff bringbar ist und der Zahnriemenrücken eine unregelmäßige Verzahnung aufweist.

Aus der Druckschrift DE 10 2009 014 925 A1 ist ein Zahnriemengetriebe mit einem Zahnriemen bekannt, wobei der Schrägungswinkel der Zähne auf der Zahnriemenscheibe um bis zu 1,0 Grad, vorzugsweise um bis zu 0,5 Grad gegenüber dem Schrägungswinkel der Zähne auf dem Zahnriemen erhöht ist.

Aus der Druckschrift DE 10 2011 009 165 A1 geht ein Getriebe hervor, das unter anderem einen ersten und einen zweiten, jeweils zweifach verzahnten Zahnriemen vorsieht, wobei die Zahnriemen mit mindestens einem gekoppelten Zahnriemenscheibenpaar in Eingriff stehen und entsprechend mit den beiden Zahnriemenscheibenpaaren zwei nebeneinander angeordnete Zahnriemengetriebe bilden. Das mindestens eine gekoppelte Zahnriemenscheibenpaar rotiert dabei innerhalb von zwei, jeweils als Hohlrad ausgebildeten Zahnriemenscheiben, in die die beidseitig verzahnten Zahnriemen eingreifen.

Zudem wird auf die Druckschriften JP 2002 039277 A, JP 2016 186 313 A und JP 2014 159 818 A hingewiesen, die gattungsgemäße Zahnriemengetriebe offenbaren.

Der Erfindung liegt nun die Aufgabe zugrunde, eine Getriebeanordnung mit Zahnriemen mit zwei einander gegenüberliegend angeordneten Verzahnungen bereitzustellen, bei dem die Kraftverteilung, der auf den Zahnriemen wirkenden Kräfte, im Betrieb der Getriebeanordnung verbessert ist. Insbesondere sollen keine Querkräfte (Kräfte in axialer Richtung) auftreten.

Zudem soll die Laufruhe der Getriebeanordnung erhöht und der Verschleiß verringert werden. Zugleich sollen mit derartigen Zahnriemen ausgebildete Zahnriemengetriebe einfach und platzsparend aufgebaut sowie kostengünstig herstellbar sein.

Ausgangspunkt der Erfindung ist ein Zahnriemen mit zwei einander auf gegenüberliegenden Seiten (Ober- und Unterseite) angeordneten Verzahnungen. Der die Erfindung betreffende Zahnriemen weist je Seite eine Lauffläche, mithin zwei Laufflächen auf, wobei vorzugsweise eine innere Lauffläche (Unterseite) und eine äußere Lauffläche (Oberseite) ausgebildet ist.

Die Erfindung betrifft ein Lenkgetriebe, welches zwei mit Zahnriemengetrieben ausgebildete Planetengetriebe umfasst, wobei die ersten Zahnriemenscheiben des ersten Planetengetriebes mit den ersten Zahnriemenscheiben des zweiten Planetengetriebes jeweils paarweise auf einer Welle drehbar in den Planetenträgern angeordnet sind und der Antrieb der Wellen und der auf den Wellen angeordneten Zahnriemenscheiben über die rotierbaren Planetenträger erfolgt, wobei eine zweite Zahnriemenscheibe des ersten Planetengetriebes feststehend angeordnet ist und eine zweite Zahnriemenscheibe des zweiten Planetengetriebes gegenüber der zweiten Zahnriemenscheibe des ersten Planetengetriebes angeordnet ist, wobei die zweite drehbare Zahnriemenscheibe des zweiten Planetengetriebes den Abtrieb der Getriebeanordnung bildet, wobei zwischen den ersten Zahnriemenscheiben und den zweiten Zahnriemenscheiben der Planetengetriebe als Dämpfungselemente Zahnriemen angeordnet sind, die mit zwei, einander gegenüberliegend angeordneten Laufflächen versehen sind, wobei auf den Laufflächen schräg zur axialen Richtung orientierte Verzahnungen angeordnet sind, wobei die Schrägung jeweils durch Schrägungswinkel zwischen der axialen Richtung und der Richtung der Zahnflanken der jeweiligen Verzahnungen definiert ist und der Schrägungswinkel der ersten Verzahnung gegensinnig zum Schrägungswinkel der zweiten Verzahnung orientiert ist.

Als axiale Richtung wird dabei die Richtung der Wellen der Zahnriemenscheiben definiert, mit denen der erfindungsgemäße Zahnriemen zusammenwirkt. Bei einem Zahnriemen ohne Schrägung der Verzahnung beträgt der Schrägungswinkel gegenüber der Wellenachse = Null.

Hierbei verlaufen die Zähne der Verzahnung parallel zur axialen Richtung, die als X-Richtung der Wellen des zugehörigen Getriebes definiert ist. Die Laufrichtung eines in Betrieb befindlichen Zahnriemens ist somit orthogonal zur axialen Richtung orientiert. Mit anderen Worten, die axiale Richtung verläuft orthogonal, also quer zur Laufrichtung.

Die Kraftübertragung mittels eines Zahnriemens mit Schrägverzahnung wirkt in vorteilhafter Weise dämpfend und spielfrei.

Die schräggestellten Verzahnungen sorgen somit in vorteilhafter Weise für eine größere Laufruhe und entsprechend geringere Geräuschemissionen.

Erfindungsgemäß ist vorgesehen, dass in Bezug zu einer quer zur Laufrichtung liegenden axialen Richtung des Zahnriemens der Schrägungswinkel der ersten Verzahnung zum Schrägungswinkel der zweiten Verzahnung des Zahnriemens gegensinnig orientiert ist.

Dabei bezieht sich die Angabe des Schrägungswinkels, wie bereits erwähnt, auf die axiale Richtung. Konkret gibt der Schrägungswinkel jeweils den von den Zahnflanken der Verzahnung und der axialen Richtung eingeschlossenen Winkel an.

Die Konzeption der Erfindung sieht vor, dass der Schrägungswinkel der ersten Verzahnung in einer ersten Richtung orientiert und der Schrägungswinkel der zweiten Verzahnung gegensinnig zum Schrägungswinkel der ersten Verzahnung orientiert ist.

Mit anderen Worten ist der Schrägungswinkel der ersten Verzahnung zum Schrägungswinkel der zweiten Verzahnung entgegengesetzt orientiert.

Mit noch anderen Worten ergibt sich bei gleich großem Betrag der beiden Schrägungswinkel der Schrägungswinkel der zweiten Verzahnung aus einer "Spiegelung" des Schrägungswinkels der ersten Verzahnung entweder an der X-Richtungsorientierung oder auch an der Laufrichtungsorientierung.

Bei gleichen Kräften auf beide Verzahnungen heben sich die in axialer Richtung des Zahnriemens wirkenden Querkräfte, die aus dem schrägen Verlauf der Zahnflanken der beiden gegensinnig orientierten Verzahnungen resultieren, in vorteilhafter Weise gegenseitig auf.

Durch die schräggestellten Zähne von Zahnriemen und Zahnriemenscheiben erfolgt eine Verstetigung des Eingriffs.

Die schräggestellten Verzahnungen sorgen somit in vorteilhafter Weise für eine größere Laufruhe und entsprechend geringere Geräuschemissionen.

Durch die erfindungsgemäß gegensinnig orientierten Schrägungen der beiden einander gegenüberliegend angeordneten Verzahnungen heben sich die in axialer Richtung wirkenden Querkräfte auf den Zahnriemen in vorteilhafter Weise gegenseitig auf. Dementsprechend erfolgt auch keine Bewegung des Zahnriemens in axialer Richtung, wie es bei herkömmlichen Zahnriemen mit gleichorientierter Schrägung der beidseitigen Verzahnungen der Fall ist.

Somit sind in vorteilhafter Weise keine seitlich des Zahnriemens an den Zahnriemenscheiben angeordneten Bordscheiben zur Verhinderung der axialen Wanderung des Zahnriemens erforderlich.

In vorteilhafter Weise kommt es somit zu keiner Reibung an den Bordscheiben und dementsprechend auch zu keinem Verschleiß des Zahnriemens an den Bordscheiben, wie es bei herkömmlichen Zahnriemen mit Schrägverzahnung zu beobachten ist.

Aufgrund der vorteilhaft vermiedenen Reibung an den Bordscheiben werden durch die gefundene Lösung die mechanischen Verluste in vorteilhafter Weise verringert. Demzufolge werden die reibungsbedingten Getriebetemperaturen reduziert und damit die thermischen Beanspruchungen der Komponenten des zugehörigen Getriebes vermindert.

Die bekannten Vorteile schräggestellter Verzahnungen waren bisher immer mit dem Nachteil verknüpft, dass auf die Zahnriemen Querkräfte wirkten, die zu eine Seitwärtsbewegung führten und damit die Anordnung von Bordscheiben erforderten. Durch die gefundene Lösung ist es erstmals gelungen, dieses Problem auf in jeder Hinsicht vorteilhafte Weise zu lösen. Somit können die Vorteile von Schrägverzahnungen bei entsprechend ausgebildeten Getrieben ohne Inkaufnahme bisher bestehender Nachteile genutzt werden.

Einer vorteilhaften Ausgestaltung der Erfindung entsprechend ist vorgesehen, dass die gegensinnig orientierten Schrägungswinkel der ersten Verzahnung und der zweiten Verzahnung einen gleichen oder einen unterschiedlichen Betrag des Schrägungswinkels aufweisen. Die Kraftwirkungen an den Zahnflanken hinsichtlich der Querkräfte, die sich aus dem unterschiedlichen Radius an Innen- und Außenseite aus der Stärke des Zahnriemens ergeben, können durch einen abweichenden Betrag des Schrägungswinkels der beiden einander gegenüberliegenden Verzahnungen kompensiert werden.

In weiterer bevorzugter Ausgestaltung der Erfindung ist vorgesehen, dass die Schrägungswinkel der beiden Verzahnungen des Zahnriemens bevorzugt einen Winkel zwischen >0 Grad und 20 Grad aufweisen. Durch den angegebenen Bereich der Orientierung der Verzahnung werden bei gleichzeitiger Berücksichtigung sonstiger Anforderungen an Zahnriemen, wie Zugfestigkeit, geringe Dehnung und Aspekte der Fertigungstechnologie, die Vorteile der Geräusch- und der Verschleißreduzierung auf vorteilhafte Weise erreicht.

In weiterer bevorzugter Ausgestaltung der Erfindung ist vorgesehen, dass die Schrägungswinkel der beiden Verzahnungen des Zahnriemens besonders bevorzugt einen Winkel von 2 bis 10 Grad aufweisen. Der angegebene Winkelbereich zwischen 2 bis 10 Grad stellt einen optimierten Bereich bezüglich der Anforderungen an erfindungsgemäße Zahnriemen dar.

Gemäß einer weiteren bevorzugten Ausgestaltung der Erfindung ist vorgesehen, dass die Verzahnungen des Zahnriemens hinsichtlich Zahnhöhe, Zahnteilung (Zahnabstand) und Zahnform gleichartig oder ungleichartig ausgebildet sind.

Dazu muss der Eingriff zwischen Zahnriemenscheibe und Verzahnung eines Zahnriemens so gestaltet sein, dass ein Zahnabstand Z im Verhältnis zur Zahnriemenbreite B geringfügig kleiner ist als der Tangens des Schrägungswinkels des schrägverzahnten Zahnriemens.

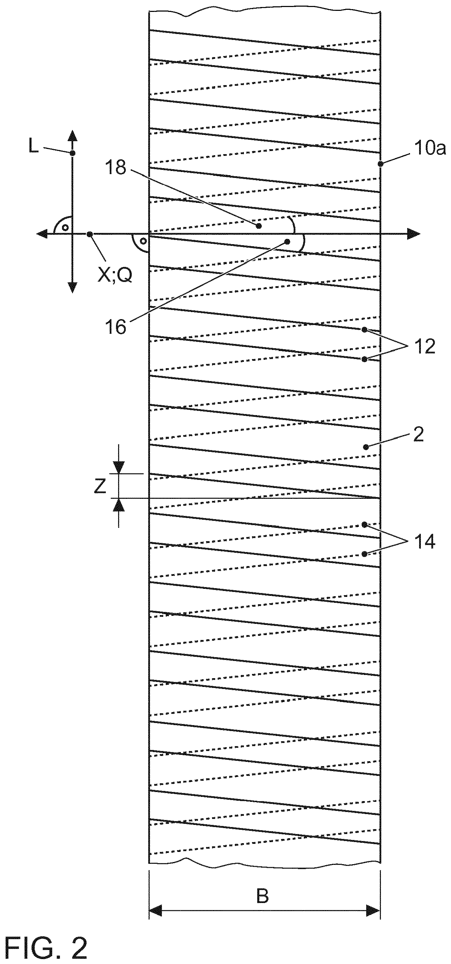

Für die Ermittlung des Tangens ist die Gegenkathete der Abstand des in Laufrichtung L anfänglichen Zahneingriffs auf der einen Kante des Zahnriemens zu dem Zahnaustritt der gegenüberliegenden Kante des Zahnriemens und die Ankathete die Zahnriemenbreite B des Zahnriemens (vergleiche Figur 2).

Bevorzugt werden Zahnabstand Z und Zahnriemenbreite B derart gewählt, dass ein bevorzugter Schrägungswinkel des Zahnriemens von 5 Grad erreicht wird.

Es werden erfindungsgemäß Zahnriemen bereitgestellt, die eine Kopplung unterschiedlicher Zahnriemenscheiben, soweit sie mit den unterschiedlichen Verzahnungen des Zahnriemens zusammenwirken, ermöglichen. Zugleich kann der Zahnriemen gegebenenfalls unterschiedlichen Anforderungen an die beiden Laufflächen angepasst werden.

Das Lenkgetriebe umfasst somit Zahnriemengetriebe mit gegenüber der axialen Richtung orthogonal zur Laufrichtung beidseitig schräggestellter Verzahnungen des Zahnriemens und der mit dem Zahnriemen zusammenwirkenden Zahnriemenscheiben.

Das Zahnriemengetriebe weist einen Zahnriemen und mindestens eine erste Zahnriemenscheibe aufweist, die in Eingriff mit der ersten Verzahnung des Zahnriemens steht und mindestens eine zweite Zahnriemenscheibe aufweist, die mit der zweiten Verzahnung des Zahnriemens im Eingriff steht, wobei vorgesehen ist, dass die Schrägstellung der Zähne der jeweiligen Zahnriemenscheibe mit der Schrägstellung der jeweiligen Verzahnung des Zahnriemens korrespondiert. Die bezüglich des Zahnriemens genannten Vorteile treffen somit auch auf das zugehörige Zahnriemengetriebe zu.

Das Zahnriemengetriebe kann insbesondere durch die entfallenden Bordscheiben in vorteilhafter Weise etwas kleiner und leichter realisiert werden. Der Montageaufwand für das erfindungsgemäße Zahnriemengetriebe ist in vorteilhafter Weise gegenüber herkömmlichen, schrägverzahnten Zahnriemengetrieben reduziert.

Die zweite Zahnriemenscheibe ist der ersten Zahnriemenscheibe gegenüberliegend angeordnet. Der Zahnriemen verläuft somit zwischen den beiden Zahnriemenscheiben und dient der spielfreien Übertragung bei gleichzeitiger Dämpfung und Geräuschreduzierung.

Diese gegenüberliegende Anordnung der beiden Zahnriemenscheiben sorgt dafür, dass die Querkräfte unmittelbar gegenüberliegend auf den zwischen den beiden Zahnriemenscheiben angeordneten Zahnriemen wirken und sich damit im Kontaktbereich von Zahnriemen und den beiden Zahnriemenscheiben aufheben.

Es ist vorgesehen, dass der Abstand zwischen der ersten Zahnriemenscheibe und der zweiten Zahnriemenscheibe geringer ist als die Stärke des Zahnriemens.

Im durch den Abstand definierten Zwischenraum zwischen sich einander gegenüberliegender erster und zweiter Zahnriemenscheibe ist der übertragende Zahnriemen angeordnet.

Durch einen Zwischenraum, der bezüglich des Zahnriemens ein Untermaß aufweist, wird der elastische Zahnriemen zusammengedrückt. Damit wird ein Anpressruck erreicht, der die Geräuschemissionen und den Verschleiß des Zahnriemengetriebes weiter verringert.

Zudem ist vorgesehen, dass die mindestens eine erste Zahnriemenscheibe die Außenverzahnung - als Stirnrad - aufweist und die zweite Zahnriemenscheibe mit der Innenverzahnung - als Hohlrad - ausgebildet ist.

In bevorzugter Ausgestaltung der Erfindung werden die Zähne des Hohl- und Planetenrades gegeneinander vorgespannt, da der Zahnriemen, der zwischen Hohl- und Planetenrad angeordnet ist, flexibel ist.

Somit wird durch die vorteilhafte Weiterbildung der Erfindung ein Zahnriemengetriebe bereitgestellt, bei dem die erfindungsgemäße Außenverzahnung der ersten Zahnriemenscheibe über den Zahnriemen mit der erfindungsgemäßen Innenverzahnung der zweiten Hohlzahnriemenscheibe zusammenwirkt.

Durch diese Anordnung werden die Geräuschemissionen des Zahnriemengetriebes minimiert.

Mit dieser Ausgestaltung des Zahnriemengetriebes werden ferner in vorteilhafter Weise die Voraussetzungen zur Ausgestaltung eines Planetengetriebes bereitgestellt, welches die erfindungsgemäßen Vorteile aufweist, die nachfolgend noch detaillierter erläutert werden.

Das Zahnriemengetriebe als ein Planetengetriebe ausgebildet ist.

Dazu sind die ersten Zahnriemenscheiben - die als Planetenräder ausgebildeten Stirnräder - rotierbar zueinander in einem Planetenträger angeordnet beziehungsweise gelagert.

Der rotierbare Planetenträger ist innerhalb der als feststehendes Hohlrad ausgebildeten zweiten Zahnriemenscheibe angeordnet, wobei die ersten als Stirnräder/Planetenräder ausgebildeten Zahnriemenscheiben im Eingriff mit der ersten Verzahnung des Zahnriemens stehen und das Hohlrad, in jeweils den ersten Zahnriemenscheiben gegenüberliegenden Bereichen, im Eingriff mit der zweiten Verzahnung des Zahnriemens steht. Der Planetenträger ist auf diese Weise über die in ihm drehbar/rotierbar gelagerten Planetenräder/Stirnräder und durch den mit vor- und rückseitiger Verzahnung versehenen Zahnriemen im Hohlrad abgestützt und geführt und also - natürlich mit gewissem Spiel - gelagert. Innen ist der Planetenträger mit einer entsprechenden Getriebewelle beispielsweise durch Pressung verbunden.

Ein Zahnriemen läuft zwischen den Stirnrädern (den Planetenrädern) und dem Hohlrad, wodurch das Planetengetriebe keine seitlich des Zahnriemens an den Zahnriemenscheiben angeordneten Bordscheiben erfordert, so dass das Planetengetriebe dementsprechend geräuschärmer, verlustärmer und verschleißärmer als herkömmliche Planetengetriebe betrieben werden kann.

Die Getriebeanordnung umfasst zwei Planetengetriebe, wobei die Planetengetriebe als Zahnriemengetriebe ausgebildet sind.

Dabei sind die ersten Zahnriemenscheiben - die Stirnräder - des ersten Planetengetriebes zusammen mit den ersten Zahnriemenscheiben - den Stirnrädern - des zweiten Planetengetriebes jeweils paarweise auf einer Zahnriemenscheibenwelle angeordnet, wobei die Zahnriemenscheibenwellen jeweils drehbar in dem Planetenträger gelagert sind.

Der Zahnriemen ist dabei je Planetengetriebe analog zu dem beschriebenen Zahnriemengetriebe angeordnet, welches als ein Planetengetriebe ausgebildet ist, wie in der Beschreibung anhand der Figuren noch erläutert wird.

Es ist bevorzugt vorgesehen, dass die Zahnriemenscheiben und der Zahnriemen des ersten Planetengetriebes einen anderen Durchmesser und/oder eine andere Teilung als die Zahnriemenscheiben und der Zahnriemen des zweiten Planetengetriebes aufweisen. Durch die unterschiedlichen Durchmesser können insbesondere gewünschte Getriebeübersetzungen realisiert werden.

Ferner ist vorgesehen, dass der Zahnriemen und die Zahnriemenscheiben des ersten Planetengetriebes einen gegensinnigen Schrägungswinkel zum Schrägungswinkel des Zahnriemens und dementsprechend der Zahnriemenscheiben des zweiten Planetengetriebes aufweisen. Wie bereits erörtert, ist der Schrägungswinkel durch die Orientierung der Zahnflanken, auf die axiale Richtung bezugnehmend, definiert.

Die gegensinnige Orientierung der Schrägung der Verzahnungen beider miteinander gekoppelter Planetengetriebe sorgt dafür, dass sich auch die Querkräfte, die auf die durch die Zahnriemenscheibenwellen paarweise gekoppelten Zahnriemenscheiben wirken, gegenseitig aufheben.

Somit werden die im Planetenträger angeordneten Wellenlager der Zahnriemenscheibenwelle in axialer Richtung in vorteilhafter Weise kaum beansprucht.

Aufgrund der gegensinnigen Orientierung der Schrägung der Verzahnungen beider miteinander gekoppelter Planetengetriebe kommen dementsprechend unterschiedliche Zahnriemen zum Einsatz.

Das Lenkgetriebe kann als Servolenkgetriebe oder als ein Force-Feedback Aktuator einer Steer-by-Wire Lenkung verwendet werden.

Die Einsatzbereiche sind vielfältig, wobei insbesondere Getriebe mit Übersetzungen von 10 < i < 100 ein Einsatzfeld für die erfindungsgemäßen Getriebeanordnungen darstellen.

Die erfindungsgemäßen Getriebe können in vorteilhafter Weise geräusch-, verlust- und verschleißarm sowie mit geringem Spiel betrieben werden.

Die Erfindung wird nachfolgend in Ausführungsbeispielen anhand der zugehörigen Zeichnungen erläutert. Es zeigen:
- Figur 1: einen Zahnriemen in einer Perspektivdarstellung mit zwei einander gegenüberliegend angeordneten Verzahnungen,
- Figur 2: einen Ausschnitt aus einem Zahnriemen mit zwei, einander gegenüberliegend angeordneten Verzahnungen in einer Ansicht von der ersten, inneren Verzahnung her,
- Figur 3: einen Längsschnitt durch ein Zahnriemengetriebe mit einem Zahnriemen sowie einer ersten Zahnriemenscheibe und einer zweiten Zahnriemenscheibe,
- Figur 4: ein Zahnriemengetriebe in einer Perspektivdarstellung mit drei ersten Zahnriemenscheiben, die mit der ersten, inneren Verzahnung des Zahnriemens in Eingriff stehen und einer zweiten, als Hohlrad ausgebildeten Zahnriemenscheibe, die mit der zweiten, äußeren Verzahnung des Zahnriemens in Eingriff steht,
- Figur 5: ein als Planetengetriebe ausgebildetes Zahnriemengetriebe mit drei ersten Zahnriemenscheiben und einer zweiten, als Hohlrad ausgebildeten Zahnriemenscheibe, die mit der inneren Verzahnung beziehungsweise äußeren Verzahnung des Zahnriemens in Eingriff stehen, wobei die drei ersten Zahnriemenscheiben in einem Planetenträger ortsfest zueinander angeordnet sind,
- Figur 6: eine Detaildarstellung aus Figur 5 mit einer ersten Zahnriemenscheibe, einer zweiten, als Hohlrad ausgebildeten Zahnriemenscheibe und einem Zahnriemen,
- Figur 7: ein Lenkgetriebe, zwei Planetengetriebe gemäß Figur 5 umfassend, in einer Perspektivdarstellung,
- Figur 8: das Lenkgetriebe, zwei Planetengetriebe gemäß Figur 5 umfassend, in einer Schnittdarstellung und
- Figur 9: eine mit zwei Planetengetrieben gemäß Figur 5 ausgebildete Getriebeanordnung des Lenkgetriebes mit je drei ersten in je einem Planetenträger angeordneten Zahnriemenscheibenpaaren in einer Explosionsdarstellung.

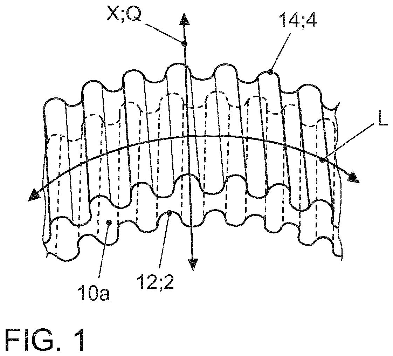

Die Figur 1 zeigt einen Zahnriemen 10a mit zwei, einander gegenüberliegend angeordneten Verzahnungen 12, 14 in einer Perspektivdarstellung. Die Verzahnungen 12, 14 sind dabei auf den beiden, einander gegenüberliegend angeordneten Laufflächen 2, 4 des Zahnriemens 10a angeordnet.

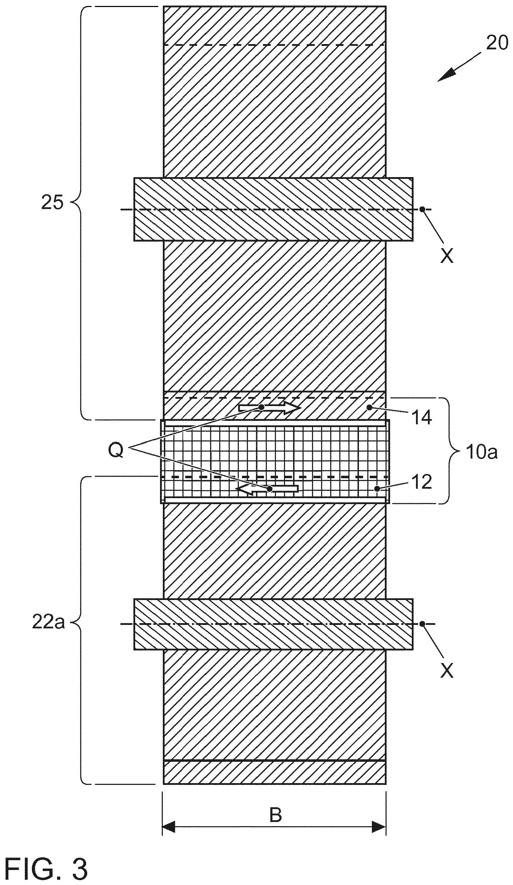

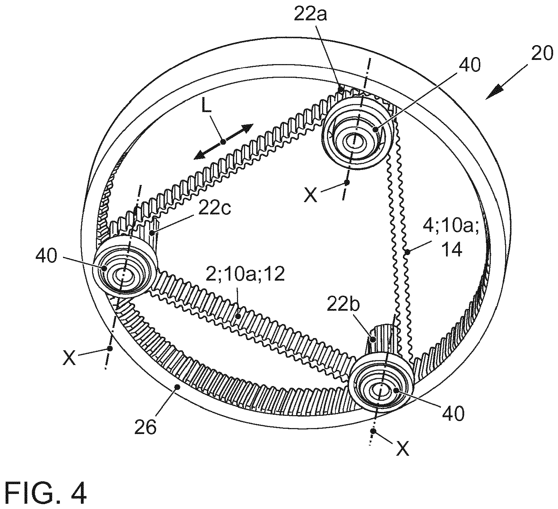

Die erste Verzahnung 12 des Zahnriemens 10a steht in Eingriff mit der Außenverzahnung einer ersten Zahnriemenscheibe (nicht dargestellt), die unterhalb des Zahnriemens 10a angeordnet ist. Die zweite Verzahnung 14 des Zahnriemens 10a steht wiederum in Eingriff mit der Verzahnung einer oberhalb des Zahnriemens 10a angeordneten zweiten Zahnriemenscheibe (nicht dargestellt), die in Figur 3 als Stirnrad und in den Figuren 4 bis 8 als Hohlrad ausgebildet ist, wie noch erläutert wird.

Dementsprechend korrespondiert die erste Verzahnung 12 des Zahnriemens 10a mit einer Verzahnung der ersten Zahnriemenscheibe und die zweite Verzahnung 14 des Zahnriemens 10a mit einer Verzahnung der zweiten Zahnriemenscheibe.

Der Vorteil der Schrägverzahnung bei Getrieben, wie auch bei Zahnriemengetrieben, besteht darin, dass eine größere Laufruhe erreicht wird und dementsprechend die Geräuschemissionen des Getriebes reduziert werden. Das Zahnriemengetriebe ermöglicht zudem eine spielfreie Übertragung.

Durch die entgegengesetzt orientierten Schrägungen der beiden einander gegenüberliegend angeordneten Verzahnungen 12, 14 heben sich die in axialer Richtung X wirkenden Querkräfte Q (vergleiche auch Figur 2) auf den Zahnriemen 10a in vorteilhafter Weise gegenseitig auf.

Die entgegengesetzt wirkenden Querkräfte Q resultieren aus den gegensinnig schräggestellten Zahnflanken der Zähne des Zahnriemens 10a bezüglich der axialen Richtung X, wobei die axiale Richtung X orthogonal zur Laufrichtung L des Zahnriemen 10a orientiert ist.

Somit wird der Zahnriemen 10a im Betrieb nicht in axialer Richtung X bewegt, wie das bei einer gleichorientierten Schrägung von beidseitig verzahnten Zahnriemen 10a, bei denen die Zahnflanken der Zähne des Zahnriemens 10a bezüglich der axialen Richtung X des Zahnriemens 10a nicht gegensinnig schräggestellt sind, der Fall ist.

Somit sind vorteilhaft keine seitlich des Zahnriemens 10a an den Zahnriemenscheiben angeordneten Bordscheiben zur Verhinderung der Wanderung des Zahnriemens 10a in axialer Richtung X erforderlich. Somit sind in allen Figuren keine Bordscheiben dargestellt.

Dementsprechend kommt es in vorteilhafter Weise auch zu keinem ansonsten auftretenden Verschleiß des Zahnriemens 10a an den Bordscheiben. Auch die Reibung und damit die mechanischen Verluste werden durch die bereitgestellte Lösung in vorteilhafter Weise verringert. Damit können auch die Getriebetemperaturen reduziert und dementsprechend die thermischen Beanspruchungen der Komponenten des zugehörigen Getriebes verringert werden. Somit kann gegebenenfalls auch eine Kühlung des Getriebes entfallen beziehungsweise geringer dimensioniert werden.

In Figur 2 ist der in Figur 1 dargestellte Zahnriemen 10a von derjenigen Seite gezeigt, die der ersten Lauffläche 2 der ersten Verzahnung 12 zugeordnet ist.

Der ersten Verzahnung 12 gegenüberliegend ist die zweite in Figur 2 nicht sichtbare zweite Verzahnung 14 angeordnet.

Der Schrägungswinkel 16 der zweiten Verzahnung 14 ist, bezogen auf die axiale Richtung X, gegensinnig zum Schrägungswinkel 18 der ersten Verzahnung 12 orientiert.

Bei - wie vorgesehen ist - gleich großem Betrag der beiden Schrägungswinkel 16, 18 ergibt sich der Schrägungswinkel 18 der zweiten Verzahnung 14 aus einer "Spiegelung" des Schrägungswinkels 16 der ersten Verzahnung 12 an gedachten Spiegelachsen, die entweder in X-Richtung X orientiert oder auch an der Laufrichtung L orientiert sind.

Die Spiegelung an einer gedachten Spiegelachse in Laufrichtung L gemäß Figur 2 wird deutlich, wenn man die außerhalb des Zahnriemens liegende L-Achse an einen der Schnittpunkte der beiden Schrägungswinkel 16, 18 verschiebt.

Bei gleichen Kräften auf beide Verzahnungen 12, 14 heben sich die in axialer Richtung X wirkenden Querkräfte Q der beiden Verzahnungen 12, 14 gegenseitig auf. Die Querkräfte Q resultieren dabei aus der Schrägung der Zahnflanken der Verzahnungen 12, 14 gegenüber der zur Laufrichtung L orthogonal orientierten axialen Richtung X des Zahnriemens 10a.

In Figur 3 ist ein Längsschnitt durch ein Zahnriemengetriebe 20 mit einem aus Figur 1 und 2 bekannten Zahnriemen 10a sowie einer ersten Zahnriemenscheibe 22a und einer zweiten Zahnriemenscheibe 25 dargestellt.

Hier weisen beide Zahnriemenscheiben 22a, 25 eine Außenverzahnung auf.

Die erste Zahnriemenscheibe 22a ist der zweiten Zahnriemenscheibe 25 gegenüberliegend angeordnet, wobei der Zahnriemen 10a zwischen den beiden als Stirnrädern 22a, 25 ausgebildeten Zahnriemenscheiben 22a, 25 verläuft.

Der Zahnriemen 10a ist mit der ersten Verzahnung 12 und der zweiten Verzahnung 14 versehen, wobei die erste Verzahnung 12 in Eingriff mit der Verzahnung der ersten Zahnriemenscheibe 22a und die zweite Verzahnung 14 in Eingriff mit der Verzahnung der zweiten Zahnriemenscheibe 25 steht.

Aufgrund des Schrägverlaufs der Verzahnungen 12, 14 des Zahnriemens 10a sind diese im Schnitt nur teilweise sichtbar und teilweise von den Verzahnungen der beiden Zahnriemenscheiben 22a, 25 verdeckt.

Die Übertragung der Momente zwischen erster Zahnriemenscheibe 22a und zweiter Zahnriemenscheibe 25 erfolgt durch den Zahnriemen 10a. Der Zahnriemen 10a wird hierbei nicht auf Zug beansprucht und wirkt somit in vorteilhafter Weise dämpfend zwischen der ersten Zahnriemenscheibe 22a und der zweiten Zahnriemenscheibe 25. Zudem wird mit dieser Anordnung ein spielfreies Zahnriemengetriebe 20 realisiert. Die Geräuschemissionen des Zahnriemengetriebes 20 werden somit vorteilhaft erheblich reduziert.

Die erste Verzahnung 12 und die zweite Verzahnung 14 weisen einen gegensinnig orientierten Schrägungswinkel auf, so dass die in axialer Richtung X wirkenden Querkräfte Q aufgrund der schräg zur axialen Richtung X verlaufenden Zahnflanken des Zahnriemens 10a und der Zahnriemenscheiben 22a, 25 sich gegenseitig aufheben.

Somit ist keine seitliche Führung des Zahnriemens 10a, wie beispielsweise mittels seitlich an den Zahnriemenscheiben 22a, 25 angeordneten Bordscheiben (nicht dargestellt), erforderlich.

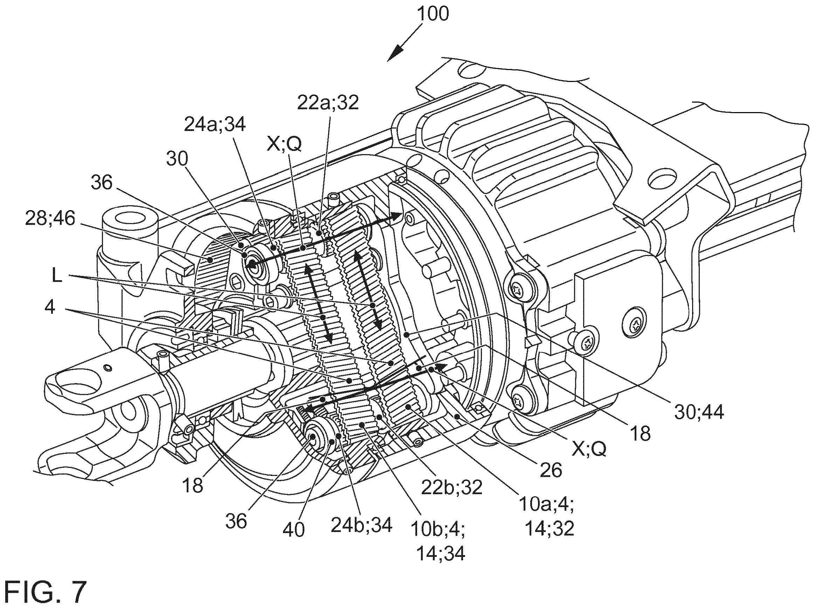

Der Wegfall der Bordscheiben hat insbesondere auch den Vorteil, dass die Montage eines Zahnriemengetriebes 20, 32, 34 (vergleiche Figuren 4 bis 6) oder einer Getriebeanordnung 100 (vergleiche Figuren 7 bis 9), die noch detailliert erläutert werden, erleichtert wird, da insbesondere die Anordnung des Zahnriemens 10a im Zahnriemengetriebes 20, 32, 34 oder der Zahnriemen 10a, 10b in der beispielhaft erläuterten Getriebeanordnung 100 auf den Zahnriemenscheiben 22a, 22b, 22c; 24a, 24b, 24c leichter zu bewerkstelligen ist.

Die Figur 4 zeigt in Perspektivdarstellung ein Zahnriemengetriebe 20 mit drei ersten Zahnriemenscheiben 22a, 22b, 22c, die mit der ersten, inneren Verzahnung 12 des Zahnriemens 10a in Eingriff stehen und einer zweiten, als Hohlrad 26 ausgebildeten, Zahnriemenscheibe 26, die mit der zweiten, äußeren Verzahnung 14 des Zahnriemens 10a in Eingriff steht.

Dabei sind die Verzahnungen der drei ersten Zahnriemenscheiben 22a, 22b, 22c jeweils der Verzahnung der zweiten Zahnriemenscheibe 26 unmittelbar gegenüberliegend angeordnet, so dass die Kräfte von den innenliegenden ersten Zahnriemenscheiben 22a, 22b, 22c über die erste Verzahnung 12 und die zweite Verzahnung 14 des Zahnriemens 10a auf die zweite Zahnriemenscheibe 26 übertragen werden.

Der Zahnriemen 10a wird dabei nicht auf Zug beansprucht und wirkt insbesondere dämpfend zwischen den ersten Zahnriemenscheiben 22a, 22b, 22c und der zweiten Zahnriemenscheibe 26. Durch den Zahnriemen 10a kann das Getriebe vorteilhaft ohne Spiel realisiert werden.

Das gezeigte Zahnriemengetriebe 20 basiert auf den in Figur 1 und Figur 2 gezeigten Zahnriemen 10a mit gegensinnig orientierten Schrägungswinkeln der ersten 12 und zweite Verzahnung 14. Dementsprechend kommen die Vorteile des Zahnriemens 10a auch für das gezeigte Zahnriemengetriebe 20 zur Geltung.

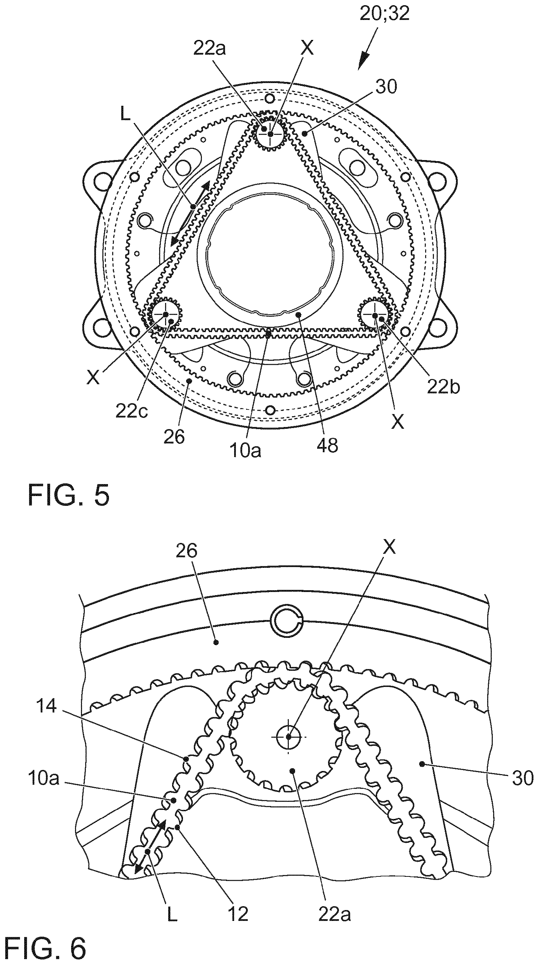

Die Figuren 5 und 6 zeigen das in Figur 4 dargestellte Zahnriemengetriebe 20, wobei die Figur 6 eine Detaildarstellung aus Figur 5 zeigt. Das Zahnriemengetriebe 20 umfasst die drei ersten Zahnriemenscheiben 22a, 22b, 22c und die zweite als Hohlrad 26 ausgebildete Zahnriemenscheibe 26, die jeweils mit der inneren Verzahnung 12 beziehungsweise der äußeren Verzahnung 14 des Zahnriemens 10a in Eingriff stehen.

Hier sind die drei ersten Zahnriemenscheiben 22a, 22b, 22c mittels einer Zahnriemenwelle 36 in einem Planetenträger 30 drehbar gelagert und somit ortsfest feststehend zueinander angeordnet. Dementsprechend ist dieses Zahnriemengetriebe 20 als Planetengetriebe 32 ausgebildet. Die Kraft wird von den drei ersten Zahnriemenscheiben 22a, 22b, 22c mittels der ersten Verzahnung 12 und der zweiten Verzahnung 14 des Zahnriemens 10a auf die zweite Zahnriemenscheibe 26 übertragen. Damit kommen für das gezeigte Planetengetriebe die oben genannten Vorteile zum Tragen.

Dabei kann bevorzugt vorgesehen sein, dass der Abstand zwischen den ersten Zahnriemenscheiben 22a, 22b, 22c und der zweiten Zahnriemenscheibe 26 geringer ist als die Stärke des Zahnriemens 10a.

Entsprechend weist der Zwischenraum zwischen den ersten Zahnriemenscheiben 22a, 22b, 22c und der zweiten Zahnriemenscheibe 26 bezüglich des dazwischen angeordneten Zahnriemens 10a ein Untermaß auf.

Somit wird der elastische Zahnriemen 10a zusammengedrückt. Damit wird ein Anpressdruck erreicht, der die Geräuschemissionen und den Verschleiß des Zahnriemengetriebes 40 noch weiter verringert.

In Figur 6 ist insbesondere auch die Schrägverzahnung von Zahnriemen 10a und erster Zahnriemenscheibe 22a sowie zweiter Zahnriemenscheibe 26 erkennbar.

In Figur 7 ist eine weitere bevorzugte Ausführungsvariante dargestellt, welche eine zwei Planetengetriebe 32, 34 umfassende Getriebeanordnung 100 in einer Perspektivdarstellung zeigt.

Diese Planetengetriebe 32, 34 sind bereits in Zusammenhang mit den Figuren 5 und 6 gezeigt und beschrieben.

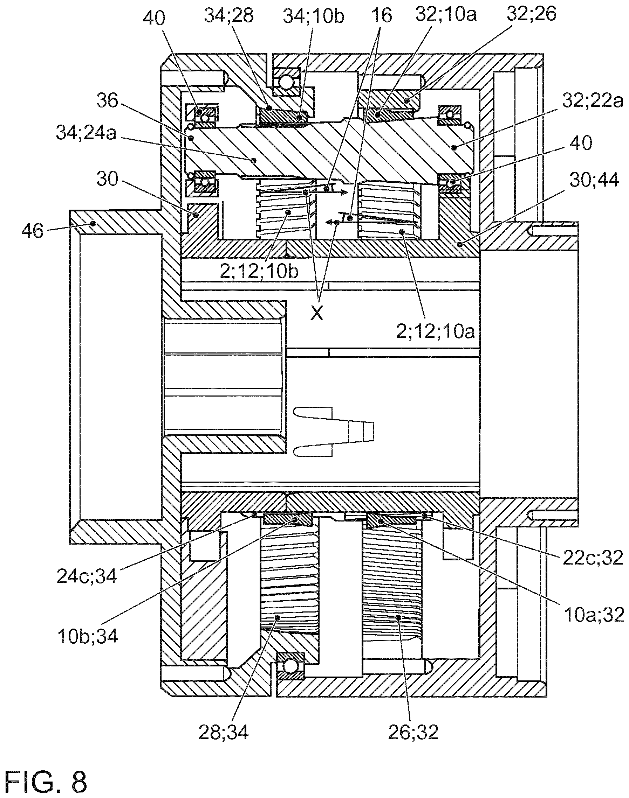

Die Figur 8 zeigt die in Figur 7 dargestellte Getriebeanordnung 100 in einer Längsschnittdarstellung.

Die Planetengetriebe 32, 34 sind in eine als Lenkgetriebe ausgebildete Getriebeanordnung 100 integriert.

In einer möglichen Ausführungsform ist eine Getriebeanordnung 100 ausgebildet, die zwei Zahnriemengetriebe 32, 34 umfasst, die wie bereits erläutert, als Planetengetriebe 32, 34 ausgebildet sind.

Die ersten Zahnriemenscheiben 22a, 22b, 22c des ersten Planetengetriebes 32 mit den ersten Zahnriemenscheiben 24a, 24b, 24c des zweiten Planetengetriebes 34 sind jeweils paarweise auf je einer Welle 36 drehbar in den Planetenträgern 30 angeordnet.

Der Antrieb 44 (vergleiche Figuren 7 und 8 in einer Zusammenschau) der Wellen 36 und der auf den Wellen 36 angeordneten Zahnriemenscheiben 22a, 22b, 22c; 24a, 24b, 24c erfolgt über die rotierbaren Planetenträger 30.

Dabei ist vorgesehen, dass eine zweite als Hohlrad ausgebildete Zahnriemenscheibe 26 des ersten Planetengetriebes 32 feststehend angeordnet ist, und eine zweite ebenfalls als Hohlrad ausgebildete Zahnriemenscheibe 28 des zweiten Planetengetriebes 34 gegenüber der zweiten Zahnriemenscheibe 26 des ersten Planetengetriebes 32 drehbar angeordnet ist,

Die zweite Zahnriemenscheibe 28 des zweiten Planetengetriebes 34 bildet den Abtrieb 46 der Getriebeanordnung 100, wobei die zweite Zahnriemenscheibe 28 mit einer lenkradseitigen Welle (nicht dargestellt) wirkverbunden ist.

Vorgesehen ist erfindungsgemäß ferner, dass zwischen den ersten Zahnriemenscheiben 22a, 22b, 22c; 24a, 24b, 24c und den zweiten Zahnriemenscheiben 26, 28 die erfindungsgemäßen Zahnriemen 10A, 10B als Dämpfungselemente angeordnet sind.

Durch die paarweise auf einer Zahnriemenscheibenwelle 36 liegenden und somit verbundenen ersten Zahnriemenscheiben 22a, 22b, 22c des ersten Planetengetriebes 32 mit den ersten Zahnriemenscheiben 24a, 24b, 24c eines zweiten Planetengetriebes 34 werden mittels des Antriebs 44 beide Planetengetriebe 32, 34 angetrieben.

Mit anderen Worten, die paarweise Verbindung der ersten Zahnriemenscheiben 22a, 22b, 22c des ersten Planetengetriebes 32 mit den ersten Zahnriemenscheiben 24a, 24b, 24c des zweiten Planetengetriebes 34 ist jeweils durch Anordnung der Zahnriemenscheiben 22a, 22b, 22c; 24a, 24b, 24c auf drei Zahnriemenscheibenwellen 36 realisiert, wobei die drei Zahnriemenscheibenwellen 36 über Lager 40 beidseits in den Planetenträgern 30 gelagert sind.

Die beiden scheibenartig ausgebildeten Planetenträger 30 sind mit ihren Armen beidseits auf einer motorseitig angetriebenen Hohlwelle 48 (vergleiche Figur 5) fest angebracht, sodass die Hohlwelle 48 die Planetenträger in Drehung versetzt.

Die oben genannten vorteilhaften Effekte der gegensinnig zueinander orientierten Schrägungswinkel 16 der ersten Verzahnung 12 auf der Innenseite zum Schrägungswinkel 18 der zweiten Verzahnung 14 auf der Außenseite der Zahnriemen 10a, 10b als Dämpfungselemente treten in analoger Weise auch bei dieser Getriebeanordnung 100 ein.

Zudem sind die paarweise auf einer Welle 36 angeordneten ersten Zahnriemenscheiben 22a-24a, 22b- 24b, 22c- 24c in entgegengesetzter Orientierung verzahnt, wodurch bei Anordnung von zwei Zahnriemen 10A, 10B der Effekt bewirkt wird, dass sich die in axialer Richtung X auf die Zahnriemen 10a, 10b wirkenden Querkräfte Q gegenseitig aufheben.

Dementsprechend wirken auch keine Querkräfte Q auf die Zahnriemenscheibenpaare 22a-24a, 22b-24b, 22c-24c. Damit wird die axiale Beanspruchung der Lager 40 und der Planetenträger 30 in vorteilhafter Weise erheblich verringert.

Aufgrund der gegensinnigen Orientierung der Schrägung der Verzahnungen beider miteinander gekoppelter Planetengetriebe 32, 34 kommen dementsprechend unterschiedliche Zahnriemen zum Einsatz, wie in den Figuren verdeutlicht ist.

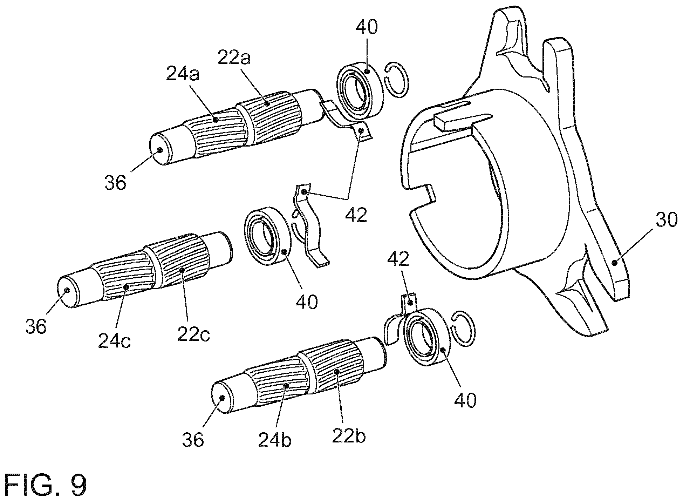

In Figur 9 sind zur Verdeutlichung einzelne Bauteile der Getriebeanordnung 100, nämlich die Zahnriemenscheibenpaare 22a-24a, 22b-24b, 22c-24c der zwei Planetengetriebe 32, 34, gemäß einer Zusammenschau der Figuren 5 bis 8 in einer Explosionsdarstellung gezeigt.

Es ist wird insbesondere verdeutlicht, dass die ersten Zahnriemenscheiben 22a, 22b, 22c des ersten Planetengetriebes 32 einen größeren Durchmesser als die ersten Zahnriemenscheiben 24a, 24b, 24c des zweiten Planetengetriebes 34 aufweisen.

Jeweils zwei erste Zahnriemenscheiben 22a-24a, 22b-24b, 22c-24c sind paarweise auf einer Welle 36 angeordnet, wobei diese mittels Lagern 40 und geeigneten Befestigungselementen 42 in den Planetenträgern 30 angeordnet sind.

Mit den unterschiedlichen Durchmessern und/oder unterschiedlicher Verzahnungsteilung der ersten Zahnriemenscheiben 22a, 22b, 22c des ersten Planetengetriebes 32 gegenüber den ersten Zahnriemenscheiben 24a, 24b, 24c des zweiten Planetengetriebes 34 kann die Übersetzung des Lenkgetriebes vorgegeben werden.

### Bezugszeichenliste

- 10a,: erster Zahnriemen
- 10b: zweiter Zahnriemen
- 2: erste Lauffläche des Zahnriemens
- 4: zweite Lauffläche des Zahnriemens
- 12: erste Verzahnung, innere Verzahnung
- 14: zweite Verzahnung, äußere Verzahnung
- 16: Schrägungswinkel der ersten Verzahnung
- 18: Schrägungswinkel der zweiten Verzahnung
- 20: Zahnriemengetriebe
- 22a, 22b, 22c: erste Zahnriemenscheibe mit Außenverzahnung (Stirnrad) in Hohlrad 26
- 24a, 24b, 24c: erste Zahnriemenscheibe mit Außenverzahnung (Stirnrad) in Hohlrad 28
- 25: zweite Zahnriemenscheibe mit Außenverzahnung (Stirnrad)
- 26: zweite Zahnriemenscheibe mit Innenverzahnung (festes Hohlrad)
- 28: zweite Zahnriemenscheibe mit Innenverzahnung (rotierendes Hohlrad)
- 30: Planetenträger
- 32: erstes Planetengetriebe, Zahnriemengetriebe
- 34: zweites Planetengetriebe, Zahnriemengetriebe
- 36: Welle, Zahnriemenscheibenwelle
- 40: Lager
- 42: Befestigungselement
- 44: Antrieb
- 46: Abtrieb
- 48: Antriebswelle
- 100: Getriebeanordnung
- X: axiale Richtung
- L: Laufrichtung
- Q: Querkraft
- B: Zahnriemenbreite
- Z: Zahnabstand

## Patentansprüche

1. Lenkgetriebe, welches zwei mit Zahnriemengetrieben (20) ausgebildete Planetengetriebe (32, 34) umfasst, wobei erste Zahnriemenscheiben (22a, 22b, 22c) eines ersten Planetengetriebes (32) mit ersten Zahnriemenscheiben (24a, 24b, 24c) eines zweiten Planetengetriebes (34) jeweils paarweise auf einer Welle (36) drehbar in Planetenträgern (30) angeordnet sind und der Antrieb (44) der Wellen (36) und der auf den Wellen (36) angeordneten Zahnriemenscheiben (22a, 22b, 22c; 24a, 24b, 24c) über die rotierbaren Planetenträger (30) erfolgt, wobei eine zweite Zahnriemenscheibe (26) des ersten Planetengetriebes (32) feststehend angeordnet ist und eine zweite Zahnriemenscheibe (28) des zweiten Planetengetriebes (34) gegenüber der zweiten Zahnriemenscheibe (26) des ersten Planetengetriebes (32) drehbar angeordnet ist, wobei die zweite drehbare Zahnriemenscheibe (28) des zweiten Planetengetriebes (34) den Abtrieb (46) des Lenkgetriebes (100) bildet, wobei zwischen den ersten Zahnriemenscheiben (22a, 22b, 22c; 24a, 24b, 24c) und den zweiten Zahnriemenscheiben (26, 28) der Planetengetriebe (32, 34) als Dämpfungselemente Zahnriemen (10A, 10B) angeordnet sind, die mit zwei einander gegenüberliegend angeordneten Laufflächen (2, 4) versehen sind, wobei auf den Laufflächen (2, 4) schräg zur axialen Richtung (X) orientierte Verzahnungen (12, 14) angeordnet sind, wobei die Schrägung jeweils durch Schrägungswinkel (16, 18) zwischen der axialen Richtung (X) und der Richtung der Zahnflanken der jeweiligen Verzahnungen (12, 14) definiert ist und der Schrägungswinkel (16) der ersten Verzahnung (12) gegensinnig zum Schrägungswinkel (18) der zweiten Verzahnung (14) orientiert ist.

2. Lenkgetriebe nach Anspruch 1, **dadurch gekennzeichnet, dass** die gegensinnig orientierten Schrägungswinkel (16, 18) der ersten Verzahnung (12) und der zweiten Verzahnung (14) einen gleichen oder einen unterschiedlichen Betrag des Schrägungswinkels (16, 18) aufweisen.

3. Lenkgetriebe nach Anspruch 1 oder 2, **dadurch gekennzeichnet, dass** die Schrägungswinkel (16, 18) einen Winkel zwischen > 0 Grad und 20 Grad aufweisen.

4. Lenkgetriebe nach Anspruch 3, **dadurch gekennzeichnet, dass** die Schrägungswinkel (16, 18) einen Winkel von 2 Grad bis 10 Grad aufweisen.

5. Lenkgetriebe nach Anspruch 4, **dadurch gekennzeichnet, dass** die Schrägungswinkel (16, 18) 5 Grad betragen.

6. Lenkgetriebe nach mindestens einem der Ansprüche 1 bis 5, **dadurch gekennzeichnet, dass** die Verzahnungen (16, 18) des Zahnriemens hinsichtlich Zahnhöhe, Zahnteilung (Zahnabstand Z) und Zahnform gleichartig oder ungleichartig ausgebildet sind.

7. Lenkgetriebe nach Anspruch 1, **dadurch gekennzeichnet, dass** der Abstand zwischen der ersten Zahnriemenscheibe (22a, 22b, 22c; 24a, 24b, 24c) und der zweiten Zahnriemenscheibe (25, 26, 28) geringer ist, als die Stärke des zwischen den Zahnriemenscheiben angeordneten Zahnriemens (10a, 10b) ist.

8. Lenkgetriebe nach Anspruch 7, **dadurch gekennzeichnet, dass** mindestens eine erste Zahnriemenscheibe (22a, 22b, 22c; 24a, 24b, 24c) eine Außenverzahnung und die mindestens eine zweite Zahnriemenscheibe (26, 28) als Hohlrad (26, 28) eine Innenverzahnung aufweist.

9. Lenkgetriebe nach Anspruch 8, **dadurch gekennzeichnet, dass** die ersten Zahnriemenscheiben (22a, 22b, 22c; 24a, 24b, 24c) rotierbar in Planetenträgern (30) eines Planetengetriebes (32, 34) zueinander angeordnet sind, wobei die Planetenträger (30) mit den Zahnriemenscheiben (22a, 22b, 22c; 24a, 24b, 24c) in der als Hohlräder (26; 28) ausgeführten zweiten Zahnriemenscheiben (26; 28) angeordnet und somit als Planetengetriebe (32; 34) ausgebildet sind.

10. Lenkgetriebe nach Anspruch 1, **dadurch gekennzeichnet, dass** die ersten Zahnriemenscheiben (22a, 22b, 22c) des ersten Planetengetriebes (32) und korrespondierend dazu die Verzahnung der zweite Zahnriemenscheibe (26) einen anderen Durchmesser und/oder eine andere Verzahnungsteilung als die ersten Zahnriemenscheiben (24a, 24b, 24c) des zweiten Planetengetriebes (34) und der korrespondierenden Verzahnung der zweiten Zahnriemenscheibe (28) aufweisen, wodurch zwischen dem Antrieb (44) und dem Abtrieb (46) ein Übersetzungsverhältnis der Getriebeanordnung (100) einstellbar ist.

11. Verwendung des Lenkgetriebes nach mindestens einem der Ansprüche 1 bis 10 als Servolenkgetriebe oder als ein Force-Feedback Aktuator einer Steer-by-Wire Lenkung.

## Claims

1. Steering gear which comprises two planetary gearboxes (32, 34) which are configured with toothed-belt pulleys (20), wherein first toothed-belt pulleys (22a, 22b, 22c) of a first planetary gearbox (32) are in each case disposed in pairs with first toothed-belt pulleys (24a, 24b, 24c) of a second planetary gearbox (34) in planet carriers (30) so as to be rotatable on a shaft (36), and the drive input (44) of the shafts (36) and of the toothed-belt pulleys (22a, 22b, 22c; 24a, 24b, 24c) disposed on the shafts (36) is performed by way of the rotatable planet carriers (30); wherein a second toothed-belt pulley (26) of the first planetary gearbox (32) is disposed so as to be stationary, and a second toothed-belt pulley (28) of the second planetary gearbox (34) is disposed so as to be rotatable relative to the second toothed-belt pulley (26) of the first planetary gearbox (32); wherein the second rotatable toothed-belt pulley (28) of the second planetary gearbox (34) forms the drive output (46) of the steering gear (100); wherein toothed belts (10A, 10B), which are provided with two running surfaces (2, 4) disposed opposite one another, are disposed as damping elements between the first toothed-belt pulleys (22a, 22b, 22c; 24a, 24b, 24c) and the second toothed-belt pulleys (26, 28) of the planetary gearboxes (32, 34); wherein disposed on the running surfaces (2, 4) are toothings (12, 14) which are oriented obliquely to the axial direction (X), wherein the obliquity is in each case defined by helix angles (16, 18) between the axial direction (X) and the direction of the tooth flanks of the respective toothings (12, 14), and the helix angle (16) of the first toothing (12) is oriented oppositely to the helix angle (18) of the second toothing (14).

2. Steering gear according to Claim 1, **characterized in that** the oppositely oriented helix angles (16, 18) of the first toothing (12) and of the second toothing (14) have an equal or different magnitude of the helix angle (16, 18).

3. Steering gear according to Claim 1 or 2, **characterized in that** the helix angles (16, 18) have an angle between > 0 degrees and 20 degrees.

4. Steering gear according to Claim 3, **characterized in that** the helix angles (16, 18) have an angle of 2 degrees to 10 degrees.

5. Steering gear according to Claim 4, **characterized in that** the helix angles (16, 18) are 5 degrees.

6. Steering gear according to at least one of Claims 1 to 5, **characterized in that** the toothings (16, 18) of the toothed belt are of similar or non-similar design in terms of tooth height, tooth pitch (tooth spacing Z) and tooth shape.

7. Steering gear according to Claim 1, **characterized in that** the spacing between the first toothed-belt pulley (22a, 22b, 22c; 24a, 24b, 24c) and the second toothed-belt pulley (25, 26, 28) is smaller than the thickness of the toothed belt (10a, 10b) disposed between the toothed-belt pulleys.

8. Steering gear according to Claim 7, **characterized in that** at least one toothed-belt pulley (22a, 22b, 22c; 24a, 24b, 24c) has an external toothing, and the at least one second toothed-belt pulley (26, 28) as a ring gear (26, 28) has an internal toothing.

9. Steering gear according to Claim 8, **characterized in that** the first toothed-belt pulleys (22a, 22b, 22c; 24a, 24b, 24c) are disposed so as to be rotatable relative to one another in planet carriers (30) of a planetary gearbox (32, 34), wherein the planet carriers (30) with the toothed-belt pulleys (22a, 22b, 22c; 24a, 24b, 24c) are disposed in the second toothed-belt pulleys (26; 28) embodied as ring gears (26; 28) and are thus formed as a planetary gearbox (32; 34).

10. Steering gear according to Claim 1, **characterized in that** the first toothed-belt pulleys (22a, 22b, 22c) of the first planetary gearbox (32) and, correspondingly thereto, the toothing of the second toothed-belt pulley (26) have a different diameter and/or a different tooth pitch than the first toothed-belt pulleys (24a, 24b, 24c) of the second planetary gearbox (34) and the corresponding toothing of the second toothed-belt pulley (28), as a result of which a gearing ratio of the gearbox assembly (100) between the drive input (44) and the drive output (46) is adjustable.

11. Use of the steering gear according to at least one of Claims 1 to 10 as a servo steering gear or as a force-feedback actuator of a steer-by-wire steering system.

## Revendications

1. Mécanisme de direction, qui comprend deux engrenages planétaires (32, 34) réalisés avec des transmissions à courroie crantée (20), des premières poulies à courroie crantée (22a, 22b, 22c) d'un premier engrenage planétaire (32) étant agencées respectivement par paires sur un arbre (36) avec des premières poulies à courroie crantée (24a, 24b, 24c) d'un deuxième engrenage planétaire (34) de manière rotative dans des porte-satellites (30) et l'entraînement (44) des arbres (36) et des poulies à courroie dentée (22a, 22b, 22c ; 24a, 24b, 24c) agencées sur les arbres (36) s'effectuant par l'intermédiaire des porte-satellites rotatifs (30), une deuxième poulie à courroie dentée (26) du premier engrenage planétaire (32) étant agencée de manière fixe et une deuxième poulie à courroie dentée (28) du deuxième engrenage planétaire (34) étant agencée de manière rotative par rapport à la deuxième poulie à courroie dentée (26) du premier engrenage planétaire (32), la deuxième poulie à courroie dentée rotative (28) du deuxième engrenage planétaire (34) formant la sortie (46) du mécanisme de direction (100), entre les premières poulies à courroie dentée (22a, 22b, 22c ; 24a, 24b, 24c) et les deuxièmes poulies à courroie dentées (26, 28) des engrenages planétaires (32, 34) étant agencées en tant qu'éléments d'amortissement des courroies dentées (10A, 10B) qui sont pourvues de deux surfaces de roulement (2, 4) agencées l'une en face de l'autre, des dentures (12, 14) orientées de manière inclinée par rapport à la direction axiale (X) étant agencées sur les surfaces de roulement (2, 4), l'inclinaison étant définie respectivement par des angles d'inclinaison (16, 18) entre la direction axiale (X) et la direction des flancs de dents des dentures respectives (12, 14) et l'angle d'inclinaison (16) de la première denture (12) étant orienté en sens inverse de l'angle d'inclinaison (18) de la deuxième denture (14).

2. Mécanisme de direction selon la revendication 1, **caractérisé en ce que** les angles d'inclinaison (16, 18) orientés en sens inverse de la première denture (12) et de la deuxième denture (14) présentent une valeur identique ou différente de l'angle d'inclinaison (16, 18).

3. Mécanisme de direction selon la revendication 1 ou 2, **caractérisé en ce que** les angles d'inclinaison (16, 18) présentent un angle compris entre > 0 degré et 20 degrés.

4. Mécanisme de direction selon la revendication 3, **caractérisé en ce que** les angles d'inclinaison (16, 18) présentent un angle de 2 degrés à 10 degrés.

5. Mécanisme de direction selon la revendication 4, **caractérisé en ce que** les angles d'inclinaison (16, 18) sont de 5 degrés.

6. Mécanisme de direction selon au moins l'une quelconque des revendications 1 à 5, **caractérisé en ce que** les dentures (16, 18) de la courroie crantée sont réalisées de manière identique ou différente en termes de hauteur de dent, de pas de dent (distance entre les dents Z) et de forme de dent.

7. Mécanisme de direction selon la revendication 1, **caractérisé en ce que** la distance entre la première poulie à courroie dentée (22a, 22b, 22c ; 24a, 24b, 24c) et la deuxième poulie à courroie dentée (25, 26, 28) est inférieure à l'épaisseur de la courroie dentée (10a, 10b) agencée entre les poulies à courroie dentée.

8. Mécanisme de direction selon la revendication 7, **caractérisé en ce qu'**au moins une première poulie à courroie dentée (22a, 22b, 22c ; 24a, 24b, 24c) présente une denture extérieure et l'au moins une deuxième poulie à courroie dentée (26, 28) en tant que roue creuse (26, 28) présente une denture intérieure.

9. Mécanisme de direction selon la revendication 8, **caractérisé en ce que** les premières poulies à courroie dentée (22a, 22b, 22c ; 24a, 24b, 24c) sont agencées de manière rotative les unes par rapport aux autres dans des porte-satellites (30) d'un engrenage planétaire (32, 34), les porte-satellites (30) étant agencés avec les poulies à courroie dentée (22a, 22b, 22c ; 24a, 24b, 24c) dans les deuxièmes poulies à courroie dentée (26 ; 28) conçues sous forme de roues creuses (26 ; 28) et étant ainsi réalisés sous forme d'engrenage planétaire (32 ; 34).

10. Mécanisme de direction selon la revendication 1, **caractérisé en ce que** les premières poulies à courroie dentée (22a, 22b, 22c) du premier engrenage planétaire (32) et, en correspondance, la denture de la deuxième poulie à courroie dentée (26) présentent un autre diamètre et/ou un autre pas de denture que les premières poulies à courroie dentée (24a, 24b, 24c) du deuxième engrenage planétaire (34) et la denture correspondante de la deuxième poulie à courroie dentée (28), ce qui permet de régler un rapport de transmission de l'agencement de transmission (100) entre l'entraînement (44) et la sortie (46).

11. Utilisation du mécanisme de direction selon au moins l'une quelconque des revendications 1 à 10 en tant que mécanisme de direction assistée ou en tant qu'actionneur à retour d'effort d'une direction à commande électrique.
